# DEMANDE DE BREVET EUROPEEN

(11) **EP 1 101 716 A1**
(43) Date de publication de la demande: **23.05.2001**
(21) Numéro de dépôt: 00460065.6
(22) Date de dépôt: 20.11.2000
(51) Int. Cl.: B65G 47/19, B65G 47/51, B65G 65/48

(54) **Benne de stockage et d'alimentation régulée d'une installation de tri en déchets ménagers et/ou industriels**

(30) Priorité: 18.11.1999 FR 9914760
(71) Demandeur: Ar. Val., 56450 Theix (FR)
(72) Inventeur: Denis, Patrick, 56890 Saint-Ave (FR)
(74) Mandataire: Branger, Jean-Yves

(57) **Abrégé**

L'invention concerne une benne de stockage et de transfert d'une installation de tri en déchets (D) ménagers et/ou industriels, qui comprend un fond mouvant (2) apte à transférer lesdits déchets longitudinalement, de son extrémité amont vers son extrémité aval (12).

Elle se caractérise essentiellement par le fait qu'elle comporte au niveau de cette extrémité aval, au moins un tambour rotatif horizontal et transversal (4A ; 4B ; 4C), qui interfère avec la masse de déchets (D) en mouvement, pour les transférer hors de la benne sous la forme d'un flux régulier et aéré (F) de faible épaisseur.

## Description

La présente invention est relative à une benne de stockage et d'alimentation régulée d'une installation de tri en déchets ménagers et/ou industriels.

Le tri sélectif des déchets ménagers s'est considérablement développé ces dernières années.

Peu à peu se met en place un système de tri sélectif des déchets ménagers à la "source". Ce système consiste à inciter les particuliers, par la mise en place de poubelles ou de conteneurs placés à proximité de chez eux, de ne rejeter qu'un type de déchets par type de conteneur.

Ainsi, par exemple, les papiers stockés dans le conteneur prévu à cet effet peuvent être recyclés directement, sans pratiquement nécessiter un contrôle de la présence de déchets de nature différente.

D'autres systèmes prévoient la mise en place de différentes poubelles chez l'habitant, les déchets étant collectés, selon leur nature, dans des camions bennes compartimentés.

Toutefois, dans la plupart des cas, la collecte des déchets ménagers reste traditionnelle. Tout au plus incite-t-on les particuliers à séparer les déchets organiques des autres déchets recyclables.

Ceux-ci sont généralement constitués d'un mélange de bouteilles en matière plastique, de papiers (journaux), et de canettes métalliques. C'est ce type de mélange de déchets que l'on se propose de trier avant de mettre en oeuvre le recyclage de chacun de ses constituants.

Ce mélange est généralement amené dans un centre de tri dans des camions bennes et doit être déplacé, sous la forme d'un flux régulier et aéré, devant des opérateurs qui ont chacun pour fonction de trier un type de déchet.

Ce flux est déplacé par un convoyeur à tapis sans fin mobile.

On comprend qu'il est nécessaire de disposer de moyens permettant à ces déchets de les faire passer d'une masse compacte déversée par des camions bennes à un flux régulier et aéré, susceptible de permettre aux opérateurs d'effectuer leur tri dans de bonnes conditions.

La présente invention se propose de fournir de tels moyens.

Il s'agit de moyens simples, robustes et faciles à faire fonctionner, même par des personnes peu expérimentées.

Ces moyens consistent en une benne de stockage et d'alimentation régulée d'une installation de tri en déchets ménagers et/ou industriels, qui comprend un fond mouvant apte à transférer lesdits déchets longitudinalement, de son extrémité amont vers son extrémité aval.

Elle se caractérise essentiellement par le fait qu'elle comporte au niveau de cette extrémité aval, au moins un tambour rotatif horizontal et transversal, qui interfère avec la masse de déchets en mouvement, pour les transférer hors de la benne sous la forme d'un flux régulier et aéré de faible épaisseur.

Ainsi, il va être possible de déverser régulièrement et continuellement le contenu de camions de ramassage dans ladite benne, le ou les tambours se chargeant de déverser les déchets, par exemple sur un convoyeur à tapis roulant, sous la forme d'un flux régulier et aéré de faible épaisseur, en vue d'une opération de tri sélectif ultérieure.

Par ailleurs, selon d'autres caractéristiques avantageuses mais non limitatives de cette benne :
- celle-ci comprend au moins deux tambours, décalés à la fois longitudinalement et en hauteur, de telle sorte que le tambour placé le plus haut interfère le premier avec la masse de déchets en mouvement d'amont en aval ;
- le fond mouvant est constitué d'un convoyeur à tapis sans fin mobile ;
- ledit convoyeur est équipé de tasseaux transversaux ;
- ledit tambour est à claire-voie, avec une série de barres pourvues de dents, celles-ci étant orientées radialement ;
- ledit tambour comporte un arbre rotatif le long duquel sont fixées plusieurs séries de branches radiales, les branches de deux séries voisines étant reliées par une barre ;
- chaque série comprend au moins trois, de préférence quatre branches de même longueur, équidistantes angulairement ;
- les branches d'une série sont décalées angulairement d'une même valeur par rapport à celles de la série voisine, de sorte que les barres sont agencées le long de l'arbre, à la manière de spirales.
- lesdits tambours sont constitués de cylindres à paroi pleine, avec une série de barres pourvues de dents, celles-ci étant orientées radialement ;
- lesdites barres sont prévues amovibles et interchangeables.

D'autres caractéristiques et avantages de la présente invention apparaîtront à la lecture de la description détaillée qui va suivre d'un mode de réalisation préférentiel. Cette description sera faite en référence aux dessins annexés dans lesquels :
- la figure 1 est une vue partielle de côté, de la benne conforme à l'invention ;
- la figure 2 est une vue de dessus de l'extrémité aval de la benne, équipée de trois tambours rotatifs ;
- les figures 3 et 4 sont des vues de la section verticale d'un des tambours, selon des plans de coupe parallèles ;
- la figure 5 est une vue de face de détail d'un tambour ;
- la figure 6 est une vue de face partielle d'une barre dentée qui équipe les tambours de la benne conforme à l'invention.

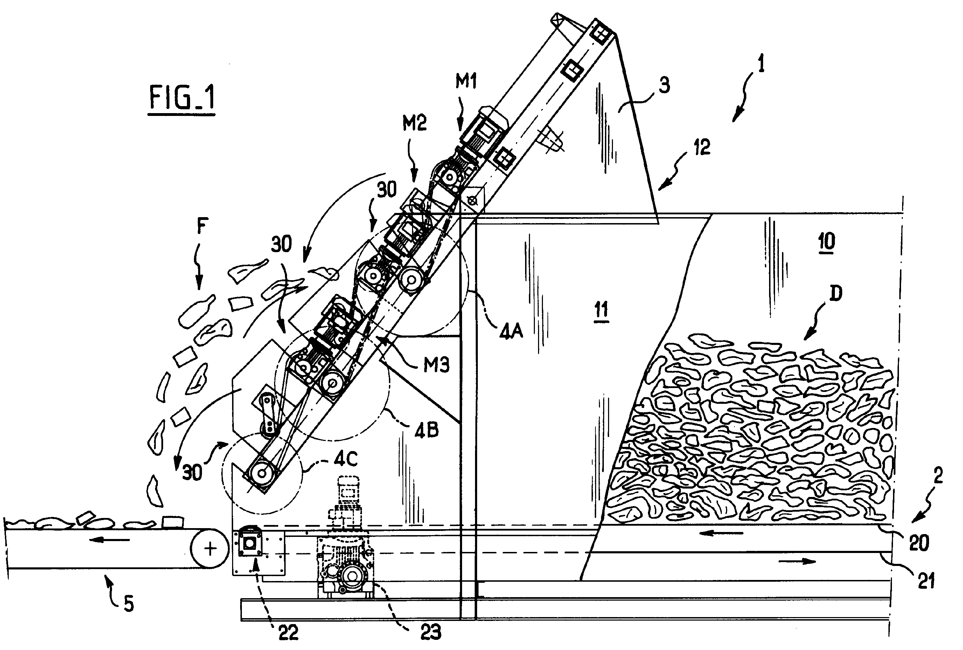

On a représenté partiellement à la figure 1, une benne 1 de stockage et de transfert d'alimentation régulée d'une installation de tri en déchets ménagers D.

Cette benne 1 est métallique et comporte deux parois longitudinales 10 et il généralement verticales, ainsi qu'une paroi de fond généralement transversale et verticale, non visible sur la figure, qui délimite une extrémité dite aval de ladite benne.

Les déchets D ont été représentés sur la figure sous la forme de matériaux de forme irrégulière. Ces déchets consistent par exemple en un mélange de journaux, de bouteilles en matière plastique, et de canettes métalliques.

Le fond de la benne est un fond mouvant apte à transférer la masse de déchets qu'elle contient de son extrémité amont vers son extrémité aval, cette dernière étant désignée par la référence numérique 12.

Dans le cas représenté ici, ce fond mouvant consiste en un convoyeur 2 à tapis sans fin mobile, dont les brins supérieur et inférieur sont respectivement référencés 20 et 21.

Sur la figure sont également visibles un rouleau d'entraînement 22 du convoyeur, ainsi que le moteur 23 qui permet d'entraîner ce rouleau en rotation.

De préférence, les brins du convoyeur sont déplacés à vitesse très lente.

Dans un mode de réalisation non représenté, les brins du convoyeur sont équipés de tasseaux transversaux, par exemple à section transversale en "L", dont la fonction est d'interférer avec la masse de déchets en mouvement pour améliorer son déplacement d'amont en aval.

Dans le prolongement des parois 10 et 11, du côté de l'extrémité aval 12, sont prévues deux plaques parallèles 3, qui s'étendent depuis le sommet desdites parois longitudinales 10 et 11 jusqu'à leur base, ces plaques étant prévues pour recevoir une série de trois rouleaux transversaux et horizontaux référencés respectivement 4A, 4B et 4C.

Des barres rigidificatrices 31 sont fixées entre les plaques 3.

Les arbres 40 de ces rouleaux sont reçus dans des échancrures 30 prévues dans les plaques 3 en regard et y sont guidés de manière adéquate.

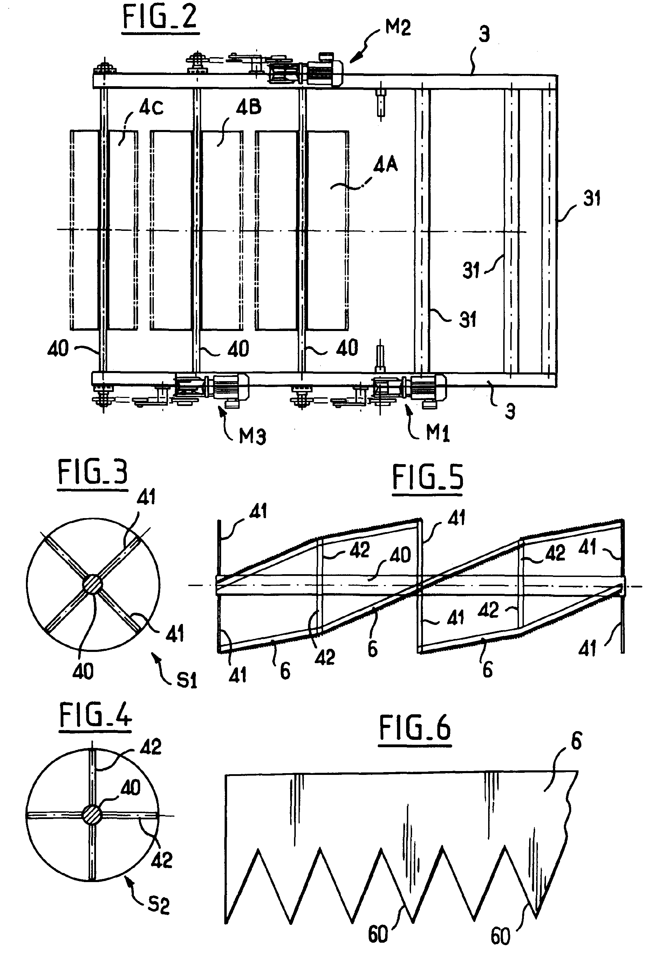

On a représenté sur les figures 1 et 2 les moteurs M₁, M₂ et M₃ qui permettent d'entraîner chacun desdits rouleaux en rotation dans le même sens. Ces moteurs sont fixés contre la face extérieure des plaques 3.

Le sens de rotation de l'arbre de sortie du moteur intermédiaire M₂ est préférentiellement choisi contraire à celui des autres moteurs. De plus, la vitesse de rotation de chacun des rouleaux est de préférence réglable indépendamment de celle du rouleau voisin.

Un système à chaîne et tendeur associé permet de transmettre le mouvement de l'arbre de sortie de chacun des moteurs au tambour respectif.

Comme le montre particulièrement la figure 1, les trois rouleaux 4A à 4C sont décalés longitudinalement et en hauteur. C'est le rouleau 4A disposé le plus haut qui interfère le premier, comme on le verra plus loin dans la description, avec la masse de déchets D en mouvement de l'amont vers l'aval de la benne.

Dans le prolongement de celle-ci, c'est-à-dire du côté de son extrémité aval 12, est prévu un convoyeur 5 à tapis sans fin mobile dont le brin supérieur se situe au même niveau que celui du fond mouvant 2 de ladite benne.

Selon une caractéristique particulièrement intéressante de l'invention, lesdits tambours sont à claire-voie, avec une série de barres 6 pourvues de dents 60, celles-ci étant orientées radialement.

Il est à noter que la forme des tambours, telle qu'elle apparaît aux figures 1 et 2, est purement schématique.

On se reportera aux figures 3 à 6 pour décrire une forme de réalisation de ces tambours.

En l'occurrence, le tambour représenté ici comporte un arbre central rotatif 40, le long duquel sont fixées plusieurs séries S₁ et S₂ de branches radiales 41 et 42, les branches de deux séries voisines étant reliées par une barre 6.

Plus précisément, chaque série S₁ et S₂ comprend quatre branches de même longueur, équidistantes angulairement, comme cela est visible sur les figures 3 et 4.

Dans une forme de réalisation différente, les branches de chaque séries pourraient être au nombre de trois.

Sur toute sa longueur, l'arbre 40 comporte donc plusieurs séries alternées S₁ et S₂. Toutefois, les branches d'une série sont décalées angulairement de 45° dans le même sens, par rapport à celles de la série voisine. Les barres 6 reliant deux à deux les branches de deux séries voisines, on a donc à faire à un agencement de ces barres le long de l'arbre à la manière de spirales. Une de ces « spirales » est visible à la figure 5.

Bien entendu, si le nombre de barres de chaque série est différent de quatre, l'angle précité est également différent.

On a représenté en détail à la figure 6 une forme de réalisation d'une barre 6. Comme le montre cette figure, cette barre est pourvue d'une série de dents 60, de préférence à rebord coupant.

Le montage des barres 6 sur les tambours est tel que les dents sont orientées radialement.

Dans un mode de réalisation non représenté sur les figures, les tambours peuvent être prévus sous la forme de cylindres à paroi pleine, sur laquelle sont rapportées les dites barres.

De préférence, ces barres sont prévues amovibles et interchangeables. En effet, dans la mesure où les dents constituent des pièces d'usure, il peut s'avérer utile de pouvoir les changer.

Nous allons maintenant décrire la façon dont on utilise la benne selon l'invention.

Le moteur 23 du fond mouvant 2 étant mis en route, on déverse dans la benne, par exemple à l'aide d'une pelle mécanique, des déchets D. La contenance de la benne est par exemple prévue suffisante pour recevoir le contenu de plusieurs pelles. Cette contenance peut être par exemple comprise entre 15 et 30 m³.

La masse compacte de déchets D reçue sur le fond mouvant est donc régulièrement déplacée, si possible à très faible vitesse, en direction de son extrémité aval 12.

Les moteurs M₁, M₂ et M₃ des tambours ayant été mis préalablement en route, la masse de déchets en mouvement interfère avec le déplacement des tambours, de sorte que ceux-ci accrochent et prélèvent régulièrement des déchets contenus dans la benne.

Ce prélèvement se fait progressivement de haut en bas, du fait que les trois tambours sont décalés à la fois longitudinalement et en hauteur.

Leurs sens de rotation étant avantageusement inversés, il s'opère une sortie préférentielle des déchets au-dessus du tambour 4A et entre les tambours 4B et 4C.

De plus, dès lors que leurs vitesses de rotation respectives sont différentes, on constate que des sacs qui renferment des déchets se trouvent ouverts et déchirés, par cisaillement entre les rouleaux.

Les déchets sont alors déversés sur le convoyeur 5 sous la forme d'un flux F aéré et régulier, de faible épaisseur.

Du fait que les tambours sont de préférence à claire-voie, des déchets tels que des bouteilles en plastique sont, le cas échéant, aptes à traverser les tambours sans être accrochés par les barres 6.

Toutefois, ces dernières sont particulièrement utiles pour racler la masse disparate de déchets, de manière à « accrocher » les déchets à surface lisse. Ainsi, aussi bien les papiers que les produits en plastique ou en métal sont transférés hors de l'enceinte.

La disposition des barres 6 en spirales contribue à provoquer un « balayage» transversal et régulier de la masse de déchets en mouvement.

Bien entendu, dans une autre forme de réalisation, on pourrait envisager d'équiper la benne d'un nombre inférieur de rouleaux ou, au contraire, d'un nombre supérieur.

De même, on peut utiliser des rouleaux dont les barres 6 sont disposées selon leurs génératrices.

Les déchets reçus sur le convoyeur à tapis mobile 5 sont dirigés vers une installation de tri sélectif. Arrivant à ce niveau sous la forme d'un flux aéré et régulier, il est aisé, pour les opérateurs, de réaliser leurs opérations de tri sans avoir à brasser manuellement la masse de produit en mouvement.

Dans un mode de réalisation particulier, la vitesse de rotation des rouleaux peut être asservie à celle du fond mouvant.

A ce dernier peut être associé un système de pesons qui mesure en temps réel le poids de déchets dans la benne. Un calculateur y est couplé pour calculer le débit en sortie de benne, le comparer à une valeur de consigne et ajuster la vitesse du fond mouvant et des rouleaux.

Enfin, pour résoudre des problèmes de bourrage des déchets au niveau des rouleaux, les plaques 3 qui supportent les rouleaux peuvent être prévues articulées et relevables, par exemple au moyen de vérins pneumatiques.

## Revendications

1. Benne de stockage et d'alimentation régulée d'une installation de tri en déchets (D) ménagers et/ou industriels, qui comprend un fond mouvant (2) apte à transférer lesdits déchets longitudinalement, de son extrémité amont vers son extrémité aval (12), caractérisée par le fait qu'elle comporte au niveau de cette extrémité aval, au moins un tambour rotatif horizontal et transversal (4A ; 4B ; 4C), qui interfère avec la masse de déchets (D) en mouvement, pour les transférer hors de la benne sous la forme d'un flux régulier et aéré (F) de faible épaisseur.

2. Benne selon la revendication 1, qui comprend au moins deux tambours (4A ; 4B ; 4C), caractérisée par le fait que ces tambours sont décalés à la fois longitudinalement et en hauteur, de telle sorte que le tambour (4A) placé le plus haut interfère le premier avec la masse de déchets (D) en mouvement d'amont en aval.

3. Benne selon la revendication 1 ou 2, caractérisée par le fait que le fond mouvant (2) est constitué d'un convoyeur à tapis sans fin mobile.

4. Benne selon la revendication 3, caractérisée par le fait que ledit convoyeur (2) est équipé de tasseaux transversaux.

5. Benne selon l'une des revendications 1 à 4, caractérisée par le fait que ledit tambour (4A ; 4B ; 4C) est à claire-voie, avec une série de barres (6) pourvues de dents (60), celles-ci étant orientées radialement.

6. Benne selon la revendication 5, caractérisée par le fait que ledit tambour (4A ; 4B ; 4C) comporte un arbre rotatif (40) le long duquel sont fixées plusieurs séries (S₁, S₂) de branches radiales (41, 42), les branches de deux séries voisines étant reliées par une barre (6).

7. Benne selon la revendication 6, caractérisée par le fait que chaque série (S₁, S₂) comprend au moins trois, de préférence quatre branches (41, 42) de même longueur, équidistantes angulairement.

8. Benne selon la revendication 7, caractérisée par le fait que les branches (41) d'une série (S₁) sont décalées angulairement de même valeur par rapport à celles (42) de la série voisine (S₂), de sorte que les barres (6) sont agencées le long de l'arbre, à la manière de spirales.

9. Benne selon l'une des revendications 1 à 4, caractérisée par le fait que lesdits tambours sont constitués de cylindres à paroi pleine, avec une série de barres (6) pourvues de dents, celles-ci étant orientées radialement.

10. Benne selon l'une des revendications 5 à 9, caractérisée par le fait que lesdites barres (6) sont prévues amovibles et interchangeables.
